# FASCICULE DE BREVET EUROPEEN

(11) **EP 4 035 501 B1**
(45) Date de publication et mention de la délivrance du brevet: **19.11.2025**
(21) Numéro de dépôt: 20789652.3
(22) Date de dépôt: 22.09.2020
(51) Int. Cl.: H05B 3/50, F24H 3/04, F24H 9/1863, B60H 1/22

(54) **BOÎTIER D'INTERFACE ÉLECTRONIQUE D'UN DISPOSITIF DE CHAUFFAGE ÉLECTRIQUE D'UNE INSTALLATION DE VENTILATION, DE CHAUFFAGE ET/OU DE CLIMATISATION D'UN VÉHICULE AUTOMOBILE**
ELEKTRONISCHE SCHNITTSTELLENEINHEIT FÜR EINE ELEKTRISCHE HEIZVORRICHTUNG EINER HEIZUNGS-, LÜFTUNGS- UND/ODER KLIMAANLAGE EINES KRAFTFAHRZEUGS
ELECTRONIC INTERFACE UNIT FOR AN ELECTRICAL HEATING DEVICE OF A HEATING, VENTILATION AND/OR AIR-CONDITIONING SYSTEM OF A MOTOR VEHICLE

(30) Priorité: 27.09.2019 FR 1910716
(43) Date de publication de la demande: 03.08.2022
(73) Titulaire: VALEO SYSTEMES THERMIQUES, 78320 Le Mesnil Saint-Denis (FR)
(72) Inventeur: GOGMOS, Erwan, 78320 LE MESNIL SAINT-DENIS (FR); COUAPEL, Yann, 78320 LE MESNIL SAINT-DENIS (FR); LEFLOCH, Jonathan, 783220 LE MESNIL SAINT- DENIS (FR)
(74) Mandataire: Valeo Powertrain Systems
(86) Numéro de dépôt international: PCT/FR2020/051644
(87) Numéro de publication internationale: WO 2021/058901

(56) Documents cités:
- EP-A1- 3 310 127
- WO-A1-2020/065170
- DE-A1- 102017 106 187
- FR-A1- 3 057 817
- US-A1- 2012 085 742
- US-A1- 2013 163 969

## Description

Le domaine technique de la présente invention est celui de la ventilation, du chauffage et/ou de la climatisation des véhicules automobiles. La présente invention se rapporte plus particulièrement aux dispositifs de chauffage électriques destinés à faire partie d'une installation de ventilation, chauffage et/ou climatisation d'un véhicule automobile.

L'invention trouve une application privilégiée à un dispositif de chauffage électrique, ou dispositif de chauffage électrique, comportant des modules chauffants par diffusion de chaleur sous l'effet d'un potentiel électrique, c'est-à-dire des éléments chauffants résistifs. Il peut s'agir, par exemple, de résistances à coefficient de température positif (également connus sous l'acronyme CTP), qui permettent de produire rapidement de la chaleur dans les véhicules lorsqu'ils sont électriquement alimentés.

De tels radiateurs électriques comportent, par exemple, un cadre ajouré configuré pour loger des modules chauffants tels que précités, de manière à ce que ces modules chauffants soient au contact d'un flux d'air traversant le cadre. Un tel cadre comprend, par exemple, des compartiments recevant au moins un module chauffant qui peut être formé d'un tube à l'intérieur duquel sont logées des électrodes qui entourent les éléments chauffants résistifs. A l'extérieur du tube, les électrodes sont prolongées par des terminaux de connexion qui s'étendent par des terminaux de connexion qui s'étendent vers des terminaux de raccordement, eux-mêmes reliés à une plaque de circuits imprimés. Les terminaux de raccordement, la plaque de circuits imprimés, ainsi que les autres composants électroniques nécessaires au fonctionnement du dispositif de chauffage électrique, sont intégrés dans un boîtier d'interface électronique qui comprend une embase recevant ces composants, et un couvercle qui vient en recouvrement de l'embase pour protéger ceux-ci.

Le document EP 3 310 127 A1 divulgue un couvercle d'un boîtier d'interface électronique d'un dispositif de chauffage électrique pour véhicule automobile selon le préambule de la revendication 1.

L'évolution des technologies et des besoins thermiques des véhicules conduit à la mise en œuvre de dispositifs électriques de chauffage alimentés en haute tension, de manière à faire délivrer, par les éléments résistifs, une puissance thermique capable de chauffer l'air passant dans l'installation de ventilation, chauffage et/ou climatisation sans qu'il soit nécessaire d'ajouter un échangeur thermique additionnel. Ces dispositifs à haut voltage nécessitent de prévoir des composants électroniques en plus grand nombre et de plus grandes dimensions, ce qui induit une augmentation de la taille et du volume des boîtiers d'interface électroniques dans lesquels ces composants électroniques sont logés. L'augmentation de taille et de volume de tels boîtiers électroniques induit, à son tour, une augmentation de la taille et, notamment, de la surface, des couvercles de ces boîtiers, rendant ces couvercles plus propices aux déformations.

Un problème de tels dispositifs réside donc dans la rigidité du couvercle du boîtier d'interface électronique, qui, en raison de sa surface importante, est facilement sujet à déformation sous l'effet de contraintes mécaniques extérieures telles que, par exemple, celles qui résultent des vibrations induites par le roulage du véhicule, ou celles qui se produisent lors de l'assemblage du dispositif de chauffage électrique avec les terminaux de connexion et les terminaux de raccordement emmanchés les uns dans les autres. La présente invention s'inscrit dans ce contexte de recherche d'une solution simple, permettant la réalisation d'un couvercle d'un boîtier d'interface électronique facile à assembler avec une embase d'un tel boîtier, suffisamment rigide pour résister aux contraintes précitées, et suffisamment souple pour permettre un assemblage facile avec l'embase précédemment évoquée, sans risque d'endommagement des composants électroniques logés dans le boîtier.

Dans ce but, l'invention a pour objet, selon un premier aspect, un couvercle d'un boîtier d'interface électronique d'un dispositif de chauffage électrique pour véhicule automobile, le couvercle comprenant au moins un organe d'appui et au moins un élément d'appui respectivement configurés pour être au contact d'une carte de circuits imprimés lorsque le couvercle est fixé sur le boîtier d'interface électronique, une extrémité libre de l'au moins un organe d'appui s'étendant dans un premier plan transversal et une extrémité libre de l'au moins un élément d'appui s'étendant dans un deuxième plan transversal, l'au moins un organe d'appui et l'au moins un élément d'appui étant agencés en saillie, selon une direction perpendiculaire à un plan de référence du couvercle, à partir d'une face interne du couvercle destinée à être tournée vers l'intérieur du boîtier d'interface électronique, caractérisé en ce que le premier plan transversal et le deuxième plan transversal sont sensiblement parallèles entre eux et au plan de référence du couvercle, strictement non confondus entre eux et avec le plan de référence du couvercle, le deuxième plan transversal étant, selon une direction qui lui est perpendiculaire, plus proche du plan de référence du couvercle que le premier plan transversal.

Selon un exemple, le couvercle selon l'invention est réalisé par injection, dans un moule, d'un matériau plastique choisi pour ses propriétés thermiques et pour ses propriétés mécaniques à la fois de souplesse et de rigidité. Avantageusement, le boîtier d'interface électronique sur lequel le couvercle selon l'invention est destiné à être fixé est également réalisé par injection, dans un moule, d'un matériau plastique. Selon différents exemples, les matériaux choisis pour la réalisation du couvercle et du boîtier d'interface électronique sont identiques ou différents. L'invention s'applique également sans restriction dans le cas où tout ou partie du boîtier d'interface électronique est réalisée dans un matériau métallique formé en tôle mince, dont les propriétés mécaniques, du fait de la minceur de la tôle utilisée, sont comparables à celles d'un matériau plastique.

Selon une caractéristique optionnelle de l'invention, le couvercle comprend un pourtour et une paroi principale qui présente une forme générale sensiblement plane. Le plan dans lequel la paroi principale du couvercle s'étend principalement peut notamment être désigné comme plan de référence du couvercle. L'au moins un organe d'appui et l'au moins un élément d'appui s'étendent en saillie d'une face interne du couvercle, selon une direction perpendiculaire au plan de référence précité, et ils sont orientés de telle manière que, lorsque le couvercle selon l'invention est mis en place et fixé sur le boîtier d'interface électronique précédemment évoqué, ils sont dirigés vers les composants électroniques logés dans le boîtier.

Tel que cela a été évoqué, selon l'invention, le premier plan transversal et le deuxième plan transversal, respectivement définis par les extrémités libres des organes ou des éléments d'appui, sont sensiblement parallèles entre eux et au plan de référence du couvercle, strictement non confondus entre eux et avec le plan de référence du couvercle. En d'autres termes, l'un des plans transversaux précédemment définis est, selon une direction perpendiculaire au plan de référence du couvercle, plus proche du plan de référence précité que l'autre. C'est-à-dire que les extrémités libres de l'au moins un organe d'appui et de l'au moins un élément d'appui sont décalées les unes par rapport aux autres selon une direction, également désignée comme direction axiale, perpendiculaire au plan de référence du couvercle.

En d'autres termes encore, une dimension, mesurée selon la direction axiale précitée, c'est-à-dire perpendiculairement au plan de référence du couvercle, de l'un des moyens d'appui, à savoir l'au moins un organe d'appui ou l'au moins un élément d'appui, est inférieure à la dimension, mesurée selon la même direction axiale, de l'autre moyen d'appui.

Il résulte de ce qui précède l'existence d'un léger jeu, lorsque le couvercle selon l'invention est placé sur le boîtier d'interface électronique, entre l'au moins un élément d'appui et la carte de circuits imprimés avec laquelle cet élément d'appui est destiné à se trouver en contact une fois le couvercle fixé sur le boîtier d'interface électronique. Il faut comprendre ici que ce jeu est dimensionné pour que, lorsque le couvercle est fixé sur le boîtier, l'au moins un élément d'appui soit effectivement au contact de la carte de circuits imprimés précédemment évoquée. Selon un exemple, ce jeu, ou décalage, mesuré selon la direction axiale précitée, c'est-à-dire perpendiculairement au plan de référence, entre le premier plan transversal et le deuxième plan transversal, est de l'ordre de 1 à quelques dixièmes de millimètre. Préférentiellement, mais non exclusivement, ce décalage est inférieur à 5 dixièmes de millimètre. Il est à noter que la direction perpendiculaire au plan de référence du couvercle, ou direction axiale, est également la direction de mise en place du couvercle sur le boîtier d'interface électronique.

Selon différentes caractéristiques, prises séparément ou en combinaison :
- le couvercle comprend des moyens de fixation élastique par encliquetage sur une embase du boîtier d'interface électronique, et l'au moins un élément d'appui est situé entre un organe d'appui et un bord du couvercle sur lequel sont agencés des moyens de fixation élastique.
- l'au moins un élément d'appui comprend une pluralité de pions agencés en saillie à partir de la face interne du couvercle, perpendiculairement au plan de référence de celui-ci. Avantageusement, les pions sont tous identiques, par exemple cylindriques. Le deuxième plan transversal précédemment évoqué est donc défini par les extrémités libres de l'ensemble de ces pions.
- les pions de l'au moins un élément d'appui sont agencés en quinconce selon au moins deux lignes transversales. Plus précisément, selon cette caractéristique, les bases des pions de l'élément d'appui, par lesquelles lesdits pions sont rattachés à la face interne du couvercle selon l'invention, sont organisées, sur cette face interne, en au moins deux lignes sensiblement parallèles entre elles. De plus, selon cette caractéristique, les pions précités sont disposés en quinconce selon les deux lignes transversales précitées. Un tel agencement surfacique des pions constituant l'au moins un élément d'appui permet une définition précise du deuxième plan transversal précédemment décrit. Par ailleurs, dans un boîtier d'interface électronique équipé d'un couvercle selon l'invention, un tel agencement des pions localise le jeu, ou décalage, précédemment évoqué, sur l'ensemble de la surface de la région du couvercle dans laquelle sont disposés les pions. Le jeu précité devient donc un jeu surfacique, permettant une répartition de l'effort d'encliquetage sur l'ensemble de la surface de la région du couvercle dans laquelle s'étendent les pions. Dans un cas dans lequel les pions de l'élément d'appui sont agencés dans une région du couvercle destinée à venir en recouvrement d'une carte de circuits imprimés logée dans le boîtier d'interface électronique, ceci permet de préserver les composants électroniques de toute contrainte excessive et de tout endommagement lors de l'assemblage du couvercle avec le boîtier d'interface électronique.
- les pions constituant l'au moins un élément d'appui sont agencés en saillie d'une zone déformée de la face interne du couvercle. Avantageusement, la déformation de cette zone est dirigée, lorsque le couvercle est fixé sur le boîtier d'interface électronique, vers l'intérieur dudit boîtier, c'est-à-dire vers les composants électroniques logés dans celui-ci et, notamment, vers la carte de circuits imprimés précédemment évoquée. Selon un exemple, cette zone déformée constitue, vu depuis la face externe du couvercle, opposée à la face interne de ce dernier selon une direction perpendiculaire au plan de référence de celui-ci, une forme de cuvette rentrante dans le boîtier d'interface électronique lorsque le couvercle est fixé sur ce dernier. Il résulte de la conformation de la zone déformée que celle-ci constitue un moyen d'appui du couvercle complémentaire à l'au moins un organe et l'au moins un élément d'appui précédemment évoqués. Plus particulièrement, la présence d'une telle zone déformée permet, notamment, de réduire, voire de supprimer, tout risque de déformation du couvercle sous l'effet de vibrations et/ou de contraintes résultant du roulage du véhicule ou induites par l'opération d'assemblage du dispositif de chauffage électrique.
- l'au moins un organe d'appui comprend au moins une nervure sensiblement perpendiculaire au premier plan transversal. Selon un exemple, l'au moins un organe d'appui comprend une première portion, par exemple sensiblement cylindrique, et une deuxième portion qui s'étend à partir de la première portion en formant une nervure sensiblement plane dont le plan contient l'axe de la première portion sensiblement cylindrique. Selon un exemple, la nervure précitée s'étend à partir de la face interne du couvercle, et une dimension de celle-ci, mesurée perpendiculairement au plan de référence du couvercle, est sensiblement égale à la dimension, mesurée selon la même direction, de la première portion de l'au moins un organe d'appui. Il s'ensuit que le premier plan transversal est défini à la fois par l'extrémité libre de la première portion de l'au moins un organe d'appui et par la dimension axiale de la nervure précitée. Il est donc à noter que, selon une telle configuration, le premier plan transversal est défini par l'extrémité libre d'un seul organe d'appui, tandis que le deuxième plan transversal est défini par les extrémités libres d'une pluralité de pions. Alternativement, l'au moins un organe d'appui peut comporter une première nervure et une deuxième nervure qui s'étendent symétriquement de part et d'autre de la première portion de l'organe d'appui. Selon un exemple, le couvercle comprend plusieurs organes d'appui de l'un et/ou de l'autre type précités.

L'invention atteint bien ainsi le but qu'elle s'était fixé, en proposant, grâce à des solutions simples, un couvercle d'un boîtier d'interface électronique d'un dispositif de chauffage électrique d'une installation de ventilation, de chauffage et/ou de climatisation pour véhicule automobile, couvercle qui présente, d'une part, une rigidité suffisante pour résister, notamment aux vibrations et contraintes induites par le roulage du véhicule, et, d'autre part, une souplesse suffisante pour permettre sa fixation sur le boîtier d'interface électronique sans risque d'endommagement des composants électroniques logés dans ce boîtier sous l'effet des contraintes exercées lors de la mise en place du couvercle.

Selon un deuxième aspect, l'invention s'étend à un boîtier d'interface électronique d'un dispositif de chauffage électrique pour véhicule automobile, comprenant un couvercle tel que décrit précédemment, ainsi qu'une embase configurée pour loger une carte de circuits imprimés, l'embase comprenant des moyens d'encliquetage configurés pour coopérer avec des moyens de fixation élastique portés par le couvercle afin de fermer une cavité de réception de la carte de circuits imprimés.

Avantageusement, des moyens d'encliquetage portés par l'embase sont configurés pour coopérer avec des moyens de fixation élastique, portés par le couvercle, situés à proximité de l'au moins un élément d'appui précédemment évoqué.

Selon une caractéristique avantageuse de l'invention, un tel boîtier d'interface électronique comprend une zone de raccordement électrique et une zone de raccordement à des éléments chauffants d'un dispositif de chauffage électrique du véhicule automobile, et l'au moins un élément d'appui du couvercle est situé à proximité de la zone de raccordement aux éléments chauffants du dispositif de chauffage électrique.

Comme il a été évoqué précédemment, l'invention trouve une application privilégiée à un dispositif de chauffage électrique comportant au moins un module chauffant formé d'un tube à l'intérieur duquel sont logées des électrodes qui entourent des éléments chauffants résistifs, et dans lequel les électrodes sont prolongées, à l'extérieur du tube, par des terminaux de connexion qui s'étendent vers des terminaux de raccordement eux-mêmes reliés à la carte de circuits imprimés précédemment évoquée, placée dans le boîtier d'interface électronique. Outre la zone de raccordement de la carte de circuits imprimés aux électrodes des éléments chauffants, un tel boîtier comporte également une zone de raccordement électrique par laquelle la carte de circuits imprimés est reliée à un dispositif d'alimentation électrique, par exemple un dispositif d'alimentation électrique spécifique à l'installation de ventilation, de chauffage et/ou de climatisation, ou un dispositif d'alimentation électrique du véhicule.

Il résulte de ce qui précède que la zone de raccordement aux électrodes des éléments chauffants est, mécaniquement, la plus fragile. L'agencement de l'au moins un élément d'appui du couvercle à proximité de cette zone permet donc de protéger cette zone du boîtier d'interface électronique, par le biais du jeu précédemment défini et décrit. L'effort exercé sur la zone de raccordement aux éléments chauffants lors de la mise en place et de la fixation du couvercle sur l'embase du boîtier selon l'invention est donc réduit, ce qui permet d'éviter toute mise en contrainte et tout endommagement des éléments de raccordement présents dans cette région.

Avantageusement, dans le boîtier d'interface électronique selon l'invention, la carte de circuits imprimés est prise en sandwich entre l'au moins un organe d'appui du couvercle et un élément de renfort agencé dans l'embase. Il faut comprendre ici que l'élément de renfort est agencé selon une direction perpendiculaire au plan de référence du couvercle, et que la prise en sandwich se produit une fois que le couvercle est mis en place et fixé, par les moyens de fixation élastique par encliquetage précédemment évoqués, sur l'embase du boîtier. Ceci permet notamment de garantir le maintien de la carte de circuits imprimés et de réduire au maximum les vibrations que celle-ci pourrait présenter lors du roulage du véhicule.

L'invention s'étend enfin à un dispositif de chauffage électrique pour le chauffage d'un flux d'air dans un véhicule automobile, comprenant au moins un élément chauffant et un boîtier d'interface électronique tel que précédemment décrit.

D'autres caractéristiques et avantages de la présente invention apparaitront plus clairement à l'aide de la description et des dessins parmi lesquels :
[Fig 1] illustre schématiquement en perspective un dispositif de chauffage électrique destiné à une installation de ventilation, de chauffage et/ou de climatisation d'un véhicule automobile,
[Fig 2] est une vue schématique en perspective d'un couvercle d'un boîtier d'interface électronique selon un premier aspect de l'invention, vu du côté de la face interne de celui-ci, destinée à être tournée vers l'intérieur du boîtier d'interface électronique d'un dispositif de chauffage électrique tel que celui illustré par la figure 1,
[Fig 3] est une représentation partielle, en coupe selon un plan perpendiculaire à son plan de référence, d'un couvercle et d'un boîtier tel que ceux illustrés par la figure 2,
[Fig 4] illustre schématiquement, en coupe selon un plan perpendiculaire au plan de référence du couvercle, la mise en place et la fixation d'un couvercle sur un boîtier d'interface électronique tel que ceux illustré par la figure 3, la figure 4 illustrant plus particulièrement le boîtier d'interface électronique et le couvercle avant fixation élastique de ce dernier par encliquetage,
[Fig 5] est une vue similaire à celle de la figure 4, illustrant plus particulièrement le boîtier d'interface électronique et le couvercle une fois le couvercle fixé par encliquetage sur une embase du boîtier.

Il faut tout d'abord noter que si les figures exposent l'invention de manière détaillée pour sa mise en œuvre, ces figures peuvent bien entendu servir à mieux définir l'invention le cas échéant. Il est également à noter que ces figures n'exposent qu'une partie des exemples de réalisation possibles selon l'invention.

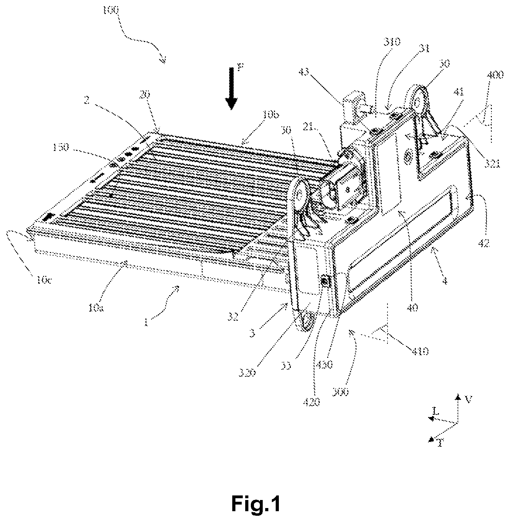

En référence à la figure 1, un dispositif de chauffage électrique 100 apte à équiper une installation de ventilation, chauffage et/ou climatisation d'un véhicule automobile comprend notamment un cadre 1 dans lequel sont disposés plusieurs éléments chauffants 2 dont le rôle est de chauffer un flux d'air traversant le cadre 1. La direction d'un tel flux d'air est représentée par la flèche F sur la figure 1. Le dispositif de chauffage électrique 100 comprend également un boîtier d'interface électronique 300 configuré pour loger l'ensemble des composants électroniques qui permettent à la fois d'alimenter électriquement le dispositif de chauffage électrique 100 et d'en contrôler le fonctionnement.

Selon l'exemple plus particulièrement illustré par la figure 1, le cadre 1 présente sensiblement la forme d'un parallélépipède rectangle dont la plus grande dimension s'étend selon une direction longitudinale L du dispositif de chauffage électrique 100. Plus précisément, le cadre 1 est constitué de deux parois latérales sensiblement planes, respectivement 10a, 10b, sensiblement parallèles entre elles, aux tolérances de fabrication près, et d'une paroi de fond 10c sensiblement plane et perpendiculaire aux parois latérales 10a, 10b. Les parois latérales 10a, 10b et la paroi de fond 10c forment ensemble un U dont la paroi de fond 10c forme la base, et elles délimitent ensemble un logement d'accueil 150 des éléments chauffants 2. Comme le montre la figure 1, les parois latérales 10a, 10b du cadre 1, s'étendent principalement selon la direction longitudinale L précédemment évoquée, et la paroi de fond 10c, sensiblement perpendiculaire aux parois latérales 10a, 10b, s'étend principalement selon une direction transversale T du dispositif de chauffage électrique 100, la direction transversale T étant perpendiculaire à la direction longitudinale L précédemment définie. Les parois 10a, 10b, 10c s'étendent également, perpendiculairement à la direction longitudinale L et à la direction transversale T, selon une direction verticale V du dispositif de chauffage électrique 100, de telle manière que les directions L, T, V, forment ensemble un trièdre direct. Il est à noter que la direction verticale V est également, comme le montre la figure 1, la direction de passage d'un flux d'air à réchauffer dans le dispositif de chauffage électrique 100. Il est également à noter que les directions longitudinale, transversale, et verticale précitées peuvent, dans un véhicule automobile équipé d'un dispositif de chauffage électrique 100, présenter des orientations quelconques par rapport aux directions longitudinale, transversale, et verticale du véhicule considéré.

En référence aux directions et orientations définies ci-dessus, le boîtier d'interface électronique 300 est placé à l'extrémité longitudinale du cadre 1 opposée à la paroi de fond 10c de ce dernier, de manière à fermer l'ouverture du U formé par les parois 10a, 10b, 10c, du cadre 1 lors de l'assemblage du dispositif de chauffage électrique 100.

Dans le logement d'accueil 150 notamment délimité par les parois 10a, 10b, 10c du cadre 1, chaque élément chauffant 2 s'étend sensiblement parallèlement aux parois latérales 10a, 10b, du cadre 1, c'est-à-dire sensiblement parallèlement à la direction longitudinale L du dispositif de chauffage électrique 100. Chaque élément chauffant 2 comporte donc, selon la direction longitudinale L du dispositif de chauffage électrique 100, une première extrémité 20 disposée au voisinage de la paroi de fond 10c du cadre 1 et une deuxième extrémité 21 disposée à proximité du boîtier d'interface électronique 300.

Il convient de noter que le dispositif de chauffage électrique pourrait selon l'invention être réalisé sans cadre, qui a été décrit ici comme un élément structurel permettant notamment de protéger les éléments chauffants et de faciliter l'insertion du dispositif de chauffage électrique dans l'installation de ventilation, chauffage et air conditionné, et ce notamment pour des questions d'allègement du dispositif. Dans un tel contexte, les éléments chauffants restent solidaires du boîtier d'interface électronique et traversés par un flux d'air, et la structure du boîtier d'interface électronique est inchangée par rapport à ce qui va suivre.

Le boîtier d'interface électronique 300 comporte une embase 3 et un couvercle 4. L'embase 3 est configurée pour loger des composants électroniques d'alimentation et de contrôle du fonctionnement des éléments chauffants, et le couvercle 4 est configuré pour se placer en recouvrement d'une ouverture de l'embase 3 afin de protéger les composants électroniques précités. Ces composants électroniques comprennent, notamment, une carte de circuits imprimés 5, non visible sur la figure 1, configurée pour commander et contrôler le fonctionnement des éléments chauffants 2. L'embase 3 forme donc une cavité 35, non repérée sur la figure 1, de réception des composants électroniques précités et, notamment, de la carte de circuits imprimés 5.

Comme le montre la figure 1, l'embase 3 comporte des organes de fixation 30 permettant de fixer le dispositif de chauffage 100 dans un carter d'une installation de ventilation, chauffage et/ou climatisation d'un véhicule automobile.

L'embase 3 présente ici la forme générale d'un T comprenant une première partie 31 et une deuxième partie 32, dont une dimension, selon la direction transversale T du dispositif de chauffage électrique 100, est supérieure à une dimension transversale de la première partie 31. La deuxième partie 32 de l'embase 3 se situe, selon la direction longitudinale L du dispositif de chauffage électrique 100, dans le prolongement des éléments chauffants, et la première partie 31 de l'embase 3 se situe, selon la direction verticale V du dispositif de chauffage électrique 100, dans le prolongement de la deuxième partie 32. Selon la direction transversale T précitée, la première partie 31 et la deuxième partie 32 de l'embase 3 sont sensiblement centrées l'une par rapport à l'autre. La cavité de réception 35 précédemment évoquée s'étend avantageusement dans la première partie 31 et dans la deuxième partie 32 de l'embase 3.

Le couvercle 4 est situé à l'opposé, selon la direction longitudinale L du dispositif de chauffage électrique 100, de la partie par laquelle le boîtier d'interface électronique 300 et, plus précisément, l'embase 3 de ce dernier, est reliée aux éléments chauffants. Le couvercle 4 comporte une paroi principale 40, sensiblement plane, qui s'étend principalement selon un plan 400 défini par la direction transversale T et par la direction verticale V du dispositif de chauffage électrique 100. Le plan 400 précité sera désigné, dans ce qui suit, comme plan de référence du couvercle 4.

En référence à la figure 1, le couvercle 4 présente une forme en T complémentaire de celle de l'embase 3, comprenant une première partie 41, dont les formes et dimensions sont complémentaires des formes et dimensions, en projection dans le plan de référence 400, de la première partie 31 de l'embase 3, et une deuxième partie 42, dont les formes et dimensions sont complémentaires des formes et dimensions, en projection dans le plan de référence 400, de la deuxième partie 32 de l'embase 3. Plus précisément, les formes et dimensions de la première partie 41 et de la deuxième partie 42 du couvercle 4 sont définies de telle manière que le couvercle 4, lorsqu'il est fixé sur l'embase 3, recouvre et obture complètement l'ouverture de la cavité de réception 35 précédemment définie. Selon l'exemple plus particulièrement illustré par la figure 1, la cavité de réception 35 s'étend sensiblement sur la totalité de l'embase 3, le couvercle 4 venant en recouvrement de cette dernière.

L'embase 3 et le couvercle 4 comprennent également des moyens permettant la fixation élastique par encliquetage du couvercle 4 sur l'embase 3. Selon l'exemple plus particulièrement illustré par la figure 1, ces moyens comprennent notamment, d'une part, au moins un ergot 33 agencé en saillie d'une paroi de l'embase 3 et, d'autre part, des moyens complémentaires 43 agencés en saillie du pourtour du couvercle 4. Selon l'exemple plus particulièrement illustré par la figure 1, plusieurs ergots 33 sont répartis sur les parois latérales de l'embase 3. Notamment, un ergot 33 est agencé sur chaque paroi latérale 320, sensiblement parallèle à un plan longitudinal vertical 410, de la deuxième partie 32 de l'embase 3. Selon l'exemple plus particulièrement illustré par la figure 1, des ergots 33 sont également agencés sur une paroi longitudinale 321 de la deuxième partie 32 de l'embase 3, perpendiculaire aux parois latérales 320 précitées, ainsi que sur une paroi longitudinale 310 de la première partie 31 de l'embase 3. Avantageusement, le couvercle 4 compte autant de moyens de fixation élastique par encliquetage 43 que ce que l'embase 3 compte d'ergots 33.

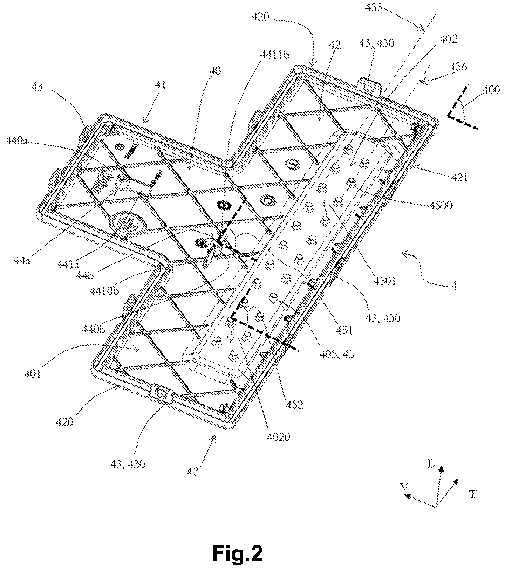

La figure 2 montre plus précisément le couvercle 4 d'un dispositif de chauffage électrique 100 tel que celui illustré par la figure 1, vu du côté intérieur de celui-ci, c'est-à-dire vu du côté de celui-ci destiné à être placé en regard de la cavité de réception 35 lorsque le couvercle 4 est fixé sur l'embase 3. Pour rappel, la cavité de réception 35 est configurée pour recevoir les composants électroniques de commande et de contrôle du fonctionnement des éléments chauffants 20 du dispositif de chauffage électrique 100.

On retrouve sur la figure 2 le plan de référence 400 du couvercle 4, précédemment défini, ainsi que la paroi principale 40, la première partie 41 et la deuxième partie 42 du couvercle 4. On retrouve également sur la figure 2 le trièdre (L, V, T), précédemment défini, du dispositif de chauffage électrique 100 tel qu'illustré par la figure 1, les parois latérales 420, précédemment évoquées, de la deuxième partie 42 du couvercle 4, ainsi que les moyens de fixation élastique par encliquetage 43 complémentaires des ergots 33 précédemment décrits. Ces moyens 43 prennent ici la forme d'œillets percés d'une ouverture configurée pour coopérer avec les ergots. Selon l'exemple illustré par la figure 2, le couvercle 4 comprend notamment plusieurs moyens de fixation élastique par encliquetage 430 situés sur les parois latérales 420 de la deuxième partie 42 du couvercle 4.

Selon l'exemple plus particulièrement illustré par la figure 2, le couvercle 4 comporte, s'étendant en saillie à partir de la face interne 401 de sa paroi principale 40, un premier organe d'appui 44a, agencé dans la première partie 41 du couvercle 4, et un deuxième organe d'appui 44b, agencé dans la deuxième partie 42 du couvercle 4.

Le premier organe d'appui 44a et le deuxième organe d'appui 44b s'étendent, à partir de la face interne 401 de la paroi principale 40 du couvercle 4, sensiblement perpendiculairement au plan de référence 400 du couvercle 4. Plus précisément, le premier organe d'appui 44a et le deuxième organe d'appui 44b sont rattachés à la face interne 401 du couvercle 4 par l'une de leurs extrémités selon la direction longitudinale L, et leur extrémité opposée, selon ladite direction longitudinale L, est libre. Les organes d'appui 44a, 44b, s'étendent donc en direction de l'intérieur du boîtier d'interface électronique 300 lorsque le couvercle est rapporté sur l'embase du boîtier d'interface électronique.

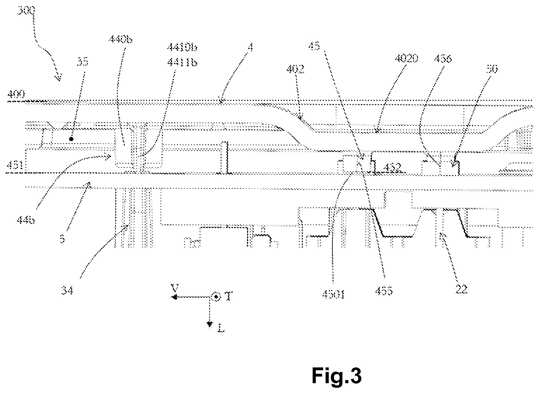

Selon l'invention, les extrémités libres du premier organe d'appui 44a et du deuxième organe d'appui 44b définissent ensemble un premier plan transversal 451, sensiblement parallèle à la direction verticale V et à la direction transversale T du couvercle 4 et du dispositif de chauffage électrique 100, et notamment visible sur la figure 3. Le premier plan transversal 451 est donc, aux tolérances de fabrication près, sensiblement parallèle au plan de référence 400 du couvercle 4.

Selon l'exemple plus particulièrement illustré par la figure 2, le premier organe d'appui 44a comprend une première portion 440a, sensiblement cylindrique, dont l'axe est, aux tolérances de fabrication près, sensiblement perpendiculaire au plan de référence 400, et une deuxième portion 441a, sensiblement plane, formant une nervure qui s'étend à partir de la première portion 440a précitée. Plus précisément, la deuxième portion 441a s'étend selon un plan, perpendiculaire au plan de référence 400 contenant l'axe de la première portion 440a. Selon l'exemple illustré par la figure 2, non exclusif, la deuxième portion 441a du premier organe d'appui 44a s'étend selon un plan sensiblement parallèle à un plan longitudinal vertical défini par les directions longitudinale L et verticale V du dispositif de chauffage électrique 100.

Selon l'exemple plus particulièrement illustré par la figure 2, le deuxième organe d'appui 44b comprend, de même que le premier organe d'appui, une première portion 440b, sensiblement cylindrique, dont l'axe est, aux tolérances de fabrication près, sensiblement perpendiculaire au plan de référence 400. Avantageusement, une dimension, mesurée perpendiculairement au plan de référence 400, de la première portion 440b du deuxième organe d'appui 44b, est identique à une dimension, mesurée selon la même direction, de la première portion 440a, du premier organe d'appui 44a.

Le deuxième organe d'appui 44b comprend également une deuxième portion sensiblement plane, qui s'étend à partir de la première portion 440b précitée. La deuxième portion du deuxième organe d'appui 44b s'étend selon un plan contenant l'axe longitudinal de la première portion 440b, et elle se présente ici sous la forme de deux nervures 4410b, 4411b diamétralement opposées par rapport à ladite première portion 440b et qui s'étendent selon un plan longitudinal transversal défini par les directions longitudinale L et transversale T du dispositif de chauffage électrique 100. Il convient de noter que ces deux nervures du deuxième organe d'appui 44b sont agencées perpendiculairement la deuxième portion 441a du premier organe d'appui 44a.

Il a été précisé précédemment que les extrémités libres du premier organe d'appui 44a et du deuxième organe d'appui 44b définissent ensemble un premier plan transversal 451, sensiblement parallèle au plan de référence 400 du couvercle 4. Ce premier plan transversal 451 est défini par les extrémités libres des nervures 441a, 4410b, 4411b, c'est-à-dire par la dimension longitudinale de celles-ci. Selon l'exemple illustré par la figure 2, les dimensions longitudinales, mesurées perpendiculairement au plan de référence 400 du couvercle 4, des nervures de chaque organe d'appui sont identiques, et elles sont ici légèrement supérieures aux dimensions correspondantes des premières portions de chaque organe d'appui.

Le couvercle 4 comporte également un élément d'appui 405, qui prend ici la forme d'une pluralité de pions 45 s'étendant en saillie à partir de la face interne 401 de sa paroi principale 40. Comme le montre la figure 2, les pions 45 s'étendent, à partir de la face interne 401, précédemment définie, du couvercle 4, selon une direction sensiblement perpendiculaire au plan de référence 400 de ce dernier. En d'autres termes, comme les organes d'appui 44a, 44b, les pions 45 s'étendent en direction de l'intérieur du boîtier d'interface électronique 300.

Les pions 45 sont ici agencés dans la deuxième partie 42 du couvercle 4. Selon l'exemple illustré par la figure 2, les pions 45 sont sensiblement cylindriques, d'axe perpendiculaire au plan de référence 400. Chaque pion 45 comporte ainsi, selon une direction longitudinale perpendiculaire au plan de référence 400, une première extrémité 4500 par laquelle il est rattaché à la face interne 401 du couvercle 4, et une deuxième extrémité 4501, libre.

Selon l'invention, les extrémités libres 4501 des pions 45 définissent ensemble un deuxième plan transversal 452, parallèle au plan de référence 400, et non confondu avec ce dernier. A cet effet, les dimensions longitudinales, mesurées perpendiculairement au plan de référence 400, des pions 45 sont toutes identiques. Plus particulièrement, et tel que cela sera particulièrement visible sur la figure 3, le deuxième plan transversal 452 est plus proche du plan de référence 400 que ne l'est le premier plan transversal 451.

Selon l'exemple illustré par la figure 2, les pions 45 sont agencés en saillie d'une zone déformée 402 de la paroi principale 40 du couvercle 4. Plus précisément, la zone déformée 402 constitue une forme de cuvette dont le fond 4020, sensiblement parallèle au plan de référence 400 du couvercle 4, s'étend en décalage, selon la direction longitudinale L, de la face interne 401 du couvercle 4, en direction de l'intérieur du boîtier d'interface électronique 300.

Cette zone déformée 402 s'étend, dans la deuxième partie 42 du couvercle 4, au voisinage des moyens de fixation élastique par encliquetage 430 agencés sur les parois latérales 420 de cette deuxième partie. Il en résulte que les pions 45 sont également situés au voisinage de ces moyens de fixation élastique 430, et notamment entre ces moyens de fixation élastique 430 et le deuxième organe d'appui 44b.

Selon l'exemple illustré par la figure 2, les pions 45 sont répartis selon deux lignes 455, 456 parallèles entre elles en étant disposés en quinconce les uns par rapport aux autres sur ces deux lignes. Par ailleurs, les pions 45 sont ici agencés sensiblement sur la totalité du fond 4020 de la zone déformée 402, parallèle au plan de référence 400 du couvercle 4.

La figure 3 montre un détail du boîtier d'interface électronique 300, dans une position dans laquelle le couvercle 4 est placé, mais non fixé, sur l'embase 3. Ce détail permet notamment de rendre visible d'une part la zone déformée 402 et les plots 45 de l'élément d'appui tels que précédemment décrits et d'autre part le deuxième organe d'appui 44b, sa première portion 440b et l'une de ses nervures 4410b, 4411b.

Plus précisément, la figure 3 rend visible un pion 45 de la ligne 455 de pions précédemment décrite, ainsi que, au niveau de l'autre ligne 456, l'extrémité d'un terminal de raccordement 50 d'un élément chauffant apte à coopérer avec une électrode 22 de cet élément chauffant, les pions 45 étant disposés en quinconce d'une ligne à l'autre.

Il est prévu selon l'invention que les organes d'appui 44a, 44b et les pions 45 soient en contact avec la carte de circuits imprimés 5 lorsque le couvercle 4 est fixé sur l'embase 3 du boîtier d'interface électronique 300, par coopération des moyens de fixation par encliquetage portés par le couvercle et l'embase.

La figure 3 rend visible que, avant cette fixation du couvercle sur l'embase, lorsque le couvercle est positionné en regard de l'embase, la nervure 4410b, 4411b, et plus généralement chacune des nervures des organes d'appui, est en contact avec la carte de circuits imprimés 5, tandis que le pion 45, et plus généralement chacun des pions, n'est pas en contact avec la carte de circuits imprimés. Plus précisément, l'invention prévoit que, dans la position dans laquelle le couvercle 4 est placé sur l'embase 3 du boîtier d'interface électronique 300, mais non fixé sur cette dernière, le premier plan transversal 451 et le deuxième plan transversal 452, précédemment décrits, sont, selon une direction perpendiculaire au plan de référence 400, décalés longitudinalement l'un par rapport à l'autre et par rapport au plan de référence 400. Le décalage longitudinal entre le premier plan transversal 451 et le deuxième plan transversal 452 est de l'ordre de 1 à quelques dixièmes de millimètre, et préférentiellement inférieur à 5 dixièmes de millimètre. Ce décalage se traduit par un jeu pour la fixation du couvercle 4 et il confère donc à ce dernier une certaine souplesse dans la région dans laquelle les pions 45 sont agencés.

Il résulte alors de l'agencement des pions 45 dans la deuxième partie 42 du couvercle 4, c'est-à-dire dans la partie de ce couvercle destinée à recouvrir la région du boîtier d'interface électronique 300 dans laquelle est située la zone de raccordement aux éléments chauffants du dispositif de chauffage électrique 100, que ceci permet d'éviter toute contrainte excessive sur les terminaux de connexion 50 et les électrodes 22 correspondantes lors de la fixation du couvercle sur l'embase.

Le jeu au montage, autorisé par le décalage axial des extrémités libres des nervures et des plots tel que précédemment décrit, est réalisé sur l'ensemble de la surface de la région dans laquelle les pions 45 sont disposés, c'est-à-dire, selon l'exemple illustré par les figures, sur l'ensemble de la surface du fond 4020 de la zone déformée 402. Ceci permet une meilleure répartition de l'effort de fixation du couvercle dans cette région.

On remarque aussi sur la figure 3 que la carte de circuits imprimés 5 est prise en sandwich entre la nervure 4410b, 4411b du deuxième organe d'appui 44b et un plot 34 de l'embase 3. Ceci permet notamment de garantir un bon maintien de la carte de circuits imprimés 5 dans le boîtier d'interface électronique 300, en réduisant l'effet des vibrations pouvant résulter du roulage du véhicule équipé du dispositif de chauffage électrique 100, ainsi que lors de la mise en place et de la fixation du couvercle 4 sur l'embase 3.

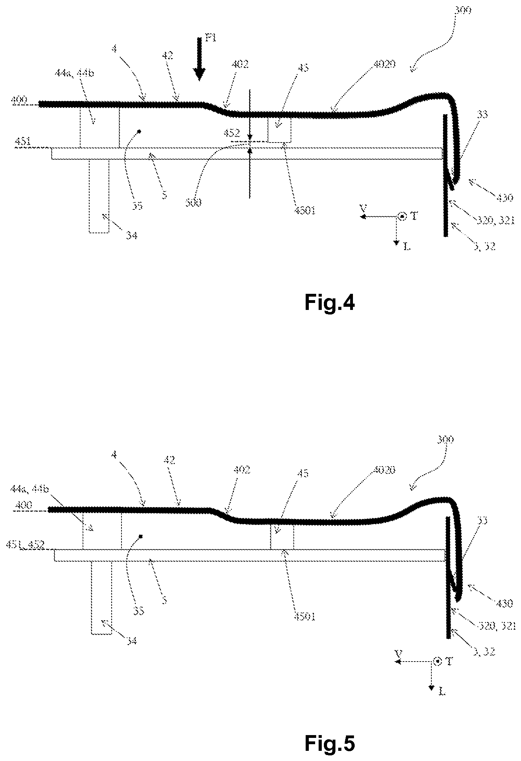

Ce qui vient d'être décrit en référence à la figure 3 est illustré schématiquement sur la figure 4, à savoir une représentation du boîtier d'interface électronique 300 dans une position dans laquelle le couvercle 4 placé sur l'embase 3, mais non fixé sur cette dernière, et la figure 5 illustre le même boîtier d'interface électronique 300 cette fois dans une position dans laquelle le couvercle 4 est fixé sur l'embase 3 précitée.

On retrouve ainsi, sur ces figures 4 et 5, le couvercle 4, son plan de référence 400, la zone déformée 402 et son fond 4020, un organe d'appui 44a, 44b, ainsi qu'un pion 45 et le plot 34 précédemment décrits. Ces figures montrent également schématiquement un ergot 33 agencé en saillie d'une paroi latérale 320, 321, de la deuxième partie 32 de l'embase 3, ainsi qu'un œillet 430 formant moyen de fixation élastique par encliquetage dans la deuxième partie 42 du couvercle 4. Il est à noter ici que, si l'organe d'appui 44b schématiquement évoqué ici peut être du type du deuxième organe d'appui 44b précédemment décrit avec deux nervures 4410b, 4411b, il peut également être du type du premier organe d'appui 44a avec une seule nervure 441a, l'organe d'appui illustré sur les figures 4a et 4b étant celui qui se trouve le plus proche des pions 45 agencés dans la deuxième partie 42 du couvercle 4.

Comme le montre la figure 4, dans la position dans laquelle le couvercle 4 est placé sur l'embase 3 mais non fixé à celle-ci, le premier plan transversal 451 et le deuxième plan transversal 452 sont décalés l'un par rapport à l'autre selon une direction longitudinale perpendiculaire au plan de référence 400 du couvercle 4. Les nervures des organes d'appui sont au contact de la carte de circuits imprimés 5 de sorte que le décalage longitudinal précédemment évoqué implique un jeu 500 entre d'une part la carte de circuits imprimés 5 et le premier plan transversal 451 et d'autre part l'extrémité libre 4501 des pions 45 et le deuxième plan transversal 452.

On comprend que pour réaliser l'engagement des œillets 430 avec les ergots 33 afin de réaliser la fixation par encliquetage du couvercle 4 sur l'embase 3, il est nécessaire d'exercer, sur le couvercle 4, un effort dirigé perpendiculairement au plan de référence 400 précité, effort dont le sens est représenté par la flèche F1 sur la figure 4.

La présence du jeu 500 permet notamment de s'assurer du bon engagement des moyens de fixation par encliquetage en dépit des jeux de fabrication et de montage des composants du boîtier d'interface électronique 300 et d'empêcher la transmission directe des contraintes apparaissant lors de la fixation par encliquetage à la carte de circuits imprimés 5 et aux terminaux de raccordement 50 des électrodes.

Il est notable que les éléments d'appui en retrait, c'est-à-dire les éléments qui sont à distance de la carte de circuits imprimés dans la position du couvercle posé sur l'embase mais non fixé, sont disposés dans une position périphérique sur le couvercle. De la sorte, il est aisé d'appuyer sur le couvercle dans cette zone en périphérie pour permettre la déformation des œillets 430 en direction des ergots 33.

La dimension du jeu 500 permettant le décalage longitudinal entre les plans transversaux 451 et 452 est calculée de manière d'une part à permettre cette déformation des œillets pour assurer la fixation par encliquetage et d'autre part à assurer le contact des pions 45 formant l'élément d'appui avec la carte de circuits imprimés lorsque le couvercle 4 est verrouillé par encliquetage sur l'embase 3, tel qu'illustré sur la figure 5. La fixation du couvercle 4 sur l'embase 3 étant une fixation élastique par encliquetage, l'œillet 430 prend appui sur l'ergot 33 correspondant en générant un effort en sens inverse au sens de l'effort de poussée F1 sur le couvercle précédemment évoqué, ce qui implique un plaquage des pions 45 contre la carte de circuits imprimés par un effet de bascule de la zone déformée 402 en direction de cette carte.

L'invention permet ainsi de réaliser un boîtier d'interface électronique 300 dont le couvercle 4 présente, d'une part, grâce aux organes d'appui 44a, 44b et aux éléments d'appui 405, une certaine rigidité, et, d'autre part, grâce au jeu 500, une souplesse permettant de réaliser sa fixation sur l'embase 3 du boîtier d'interface électronique 300 avec une contrainte minimale sur les éléments fragiles que sont les terminaux et ensemble de connexion des éléments chauffants d'un dispositif de chauffage électrique 100 pour véhicule automobile.

## Revendications

1. Couvercle (4) pour un boîtier d'interface électronique (300) pour un dispositif de chauffage électrique (100) pour véhicule automobile, le couvercle (4) comprenant au moins un organe d'appui (44a, 44b,) et au moins un élément d'appui (405, 45) configurés pour être au contact d'une carte de circuits imprimés (5) lorsque le couvercle (4) est fixé sur le boîtier d'interface électronique (300), une extrémité libre de l'au moins un organe d'appui (44a, 44b,) s'étendant dans un premier plan transversal (451) et une extrémité libre (4501) de l'au moins un élément d'appui (405, 45) s'étendant dans un deuxième plan transversal (452), l'au moins un organe d'appui (44a, 44b,) et l'au moins un élément d'appui (405, 45) étant agencés en saillie, selon une direction perpendiculaire à un plan de référence (400) du couvercle (4), à partir d'une face interne (401) du couvercle (4) destinée à être tournée vers l'intérieur du boîtier d'interface électronique (300), **caractérisé en ce que** le premier plan transversal (451) et le deuxième plan transversal (452) sont sensiblement parallèles entre eux et au plan de référence du couvercle, strictement non confondus entre eux et avec le plan de référence (400) du couvercle (4), le deuxième plan transversal (452) étant, selon une direction qui lui est perpendiculaire, plus proche du plan de référence (400) du couvercle (4) que le premier plan transversal (451).

2. Couvercle (4) selon la revendication précédente, **caractérisé en ce qu'**un décalage (500), mesuré perpendiculairement au plan de référence (400), entre le premier plan transversal (451) et le deuxième plan transversal (452), est de l'ordre de 1 à quelques dixièmes de millimètre.

3. Couvercle (4) selon l'une quelconque des revendications précédentes, comprenant des moyens (430) de fixation élastique par encliquetage sur une embase (3) du boîtier d'interface électronique (300), **caractérisé en ce que** l'au moins un élément d'appui (405, 45) est situé entre un organe d'appui (44a, 44b) et un bord du couvercle sur lequel sont agencés des moyens de fixation élastique (430).

4. Couvercle (4) selon l'une quelconque des revendications précédentes, **caractérisé en ce que** l'au moins un élément d'appui comprend une pluralité de pions (45) agencés en saillie à partir de la face interne (401) du couvercle (4), perpendiculairement au plan de référence (400) de celui-ci.

5. Couvercle (4) selon la revendication précédente, **caractérisé en ce que** les pions (45) de l'au moins un élément d'appui sont agencés en quinconce selon au moins deux lignes transversales (455, 456).

6. Couvercle (4) selon l'une quelconque des revendications 4 ou 5, **caractérisé en ce que** les pions (45) constituant l'au moins un élément d'appui sont agencés en saillie d'une zone déformée (402) de la face interne (401) du couvercle (4).

7. Couvercle (4) selon l'une quelconque des revendications précédentes, **caractérisé en ce que** l'au moins un organe d'appui (44a, 44b) comprend au moins une nervure (441a, 4410b, 4411b) sensiblement perpendiculaire au premier plan transversal (451).

8. Boîtier d'interface électronique (300) pour un dispositif de chauffage électrique (100) pour véhicule automobile, comprenant un couvercle (4) selon l'une quelconque des revendications précédentes, ainsi qu'une embase (3) configurée pour loger une carte de circuits imprimés (5), l'embase (3) comprenant des moyens d'encliquetage (33) configurés pour coopérer avec des moyens de fixation élastique (43, 430) portés par le couvercle (4) afin de fermer une cavité de réception (35) de la carte de circuits imprimés (5).

9. Boîtier (300) selon la revendication précédente, comprenant une zone de raccordement électrique et une zone de raccordement à des éléments chauffants (2) d'un dispositif de chauffage électrique (100) du véhicule automobile, **caractérisé en ce que** l'élément d'appui (45) du couvercle (4) est situé à proximité de la zone de raccordement aux éléments chauffants (2) du dispositif de chauffage électrique (100).

10. Boîtier (300) selon l'une des revendications 8 ou 9, **caractérisé en ce que** la carte de circuits imprimés (5) est prise en sandwich entre l'au moins un organe d'appui (44a, 44b) du couvercle (4) et un élément de renfort (34) agencé dans l'embase (3).

11. Dispositif de chauffage électrique (100) pour le chauffage d'un flux d'air dans un véhicule automobile, comprenant au moins un élément chauffant (2) et un boîtier d'interface électronique (300) selon l'une quelconque des revendications 8 à 10.

## Patentansprüche

1. Deckel (4) für ein elektronisches Schnittstellengehäuse (300) für eine elektrische Heizvorrichtung (100) für Kraftfahrzeuge, wobei der Deckel (4) mindestens ein Stützorgan (44a, 44b) und mindestens ein Stützelement (405, 45) umfasst, die so konfiguriert sind, dass sie mit einer Leiterplatte (5) in Kontakt stehen, wenn der Deckel (4) am elektronischen Schnittstellengehäuse (300) befestigt ist, wobei sich ein freies Ende des mindestens einen Stützorgans (44a, 44b) in einer ersten Querebene (451) erstreckt und sich ein freies Ende (4501) des mindestens einen Stützelements (405, 45) in einer zweiten Querebene (452) erstreckt, wobei das mindestens eine Stützorgan (44a, 44b) und das mindestens eine Stützelement (405, 45) in einer Richtung senkrecht zu einer Bezugsebene (400) des Deckels (4) vorstehend angeordnet sind von einer Innenseite (401) des Deckels (4) aus, die zum Inneren des elektronischen Schnittstellengehäuses (300) hin ausgerichtet ist, **dadurch gekennzeichnet, dass** die erste Querebene (451) und die zweite Querebene (452) im Wesentlichen parallel zueinander und zur Referenzebene des Deckels sind, sich nicht mit der Referenzebene (400) des Deckels (4) überschneiden, wobei die zweite Querebene (452) in einer zu ihr senkrechten Richtung näher an der Referenzebene (400) des Deckels (4) liegt als die erste Querebene (451).

2. Deckel (4) nach dem vorhergehenden Anspruch, **dadurch gekennzeichnet, dass** eine senkrecht zur Bezugsebene (400) gemessene Verschiebung (500) zwischen der ersten Querebene (451) und der zweiten Querebene (452) in der Größenordnung von 1 bis einigen Zehntelmillimetern liegt.

3. Deckel (4) gemäß einem der vorstehenden Ansprüche, mit Mitteln (430) zur elastischen Befestigung durch Einrasten auf einer Basis (3) des elektronischen Schnittstellengehäuses (300), **dadurch gekennzeichnet, dass** das mindestens eine Stützelement (405, 45) zwischen einem Stützorgan (44a, 44b) und einem Rand des Deckels angeordnet ist, an dem elastische Befestigungsmittel (430) angeordnet sind.

4. Deckel (4) nach einem der vorstehenden Ansprüche, **dadurch gekennzeichnet, dass** das mindestens eine Stützelement eine Vielzahl von Stiften (45) umfasst, die von der Innenseite (401) des Deckels (4) senkrecht zu dessen Bezugsebene (400) vorstehend angeordnet sind.

5. Deckel (4) nach dem vorhergehenden Anspruch, **dadurch gekennzeichnet, dass** die Stifte (45) des mindestens einen Stützelements versetzt in mindestens zwei Querlinien (455, 456) angeordnet sind.

6. Deckel (4) nach einem der Ansprüche 4 oder 5, **dadurch gekennzeichnet, dass** die das mindestens eine Stützelement bildenden Stifte (45) vorstehend von einem verformten Bereich (402) der Innenseite (401) des Deckels (4) angeordnet sind.

7. Deckel (4) nach einem der vorstehenden Ansprüche, **dadurch gekennzeichnet, dass** das mindestens eine Stützorgan (44a, 44b) mindestens eine Rippe (441a, 4410b, 4411b) umfasst, die im Wesentlichen senkrecht zur ersten Querebene (451) steht.

8. Elektronisches Schnittstellengehäuse (300) für eine elektrische Heizvorrichtung (100) für Kraftfahrzeuge, umfassend einen Deckel (4) gemäß einem der vorstehenden Ansprüche sowie eine Basis (3), die zur Aufnahme einer Leiterplatte (5) konfiguriert ist, wobei die Basis (3) Rastmittel (33) umfasst, die so konfiguriert sind, dass sie mit elastischen Befestigungsmitteln (43, 430) zusammenwirken, die von dem Deckel (4) getragen werden, um einen Aufnahmeraum (35) für die Leiterplatte (5) zu verschließen.

9. Gehäuse (300) nach dem vorherigen Anspruch, mit einem elektrischen Anschlussbereich und einem Anschlussbereich für Heizelemente (2) einer elektrischen Heizvorrichtung (100) des Kraftfahrzeugs, **dadurch gekennzeichnet, dass** das Stützelement (45) des Deckels (4) in der Nähe des Anschlussbereichs an die Heizelemente (2) der elektrischen Heizvorrichtung (100) angeordnet ist.

10. Gehäuse (300) nach einem der Ansprüche 8 oder 9, **dadurch gekennzeichnet, dass** die Leiterplatte (5) zwischen dem mindestens einen Stützorgan (44a, 44b) des Deckels (4) und einem in der Basis (3) angeordneten Verstärkungselement (34) angeordnet ist.

11. Elektrische Heizvorrichtung (100) zum Erwärmen eines Luftstroms in einem Kraftfahrzeug, umfassend mindestens ein Heizelement (2) und ein elektronisches Schnittstellengehäuse (300) gemäß einem der Ansprüche 8 bis 10.

## Claims

1. Cover (4) for an electronic interface housing (300) for an electric heating device (100) for a motor vehicle, the cover (4) comprising at least one support member (44a, 44b) and at least one support element (405, 45) configured to be in contact with a printed circuit board (5) when the cover (4) is fixed to the electronic interface box (300), a free end of the at least one support member (44a, 44b) extending in a first transverse plane (451) and a free end (4501) of the at least one support element (405, 45) extending in a second transverse plane (452), the at least one support member (44a, 44b) and the at least one support element (405, 45) being arranged to protrude in a direction perpendicular to a reference plane (400) of the cover (4) from an inner face (401) of the cover (4) intended to face the interior of the electronic interface box (300), **characterised in that** the first transverse plane (451) and the second transverse plane (452) are substantially parallel to each other and to the reference plane of the cover, strictly non-coincident with each other and with the reference plane (400) of the cover (4), the second transverse plane (452) being, in a direction perpendicular to it, closer to the reference plane (400) of the cover (4) than the first transverse plane (451).

2. Cover (4) according to the preceding claim, **characterised in that** an offset (500), measured perpendicular to the reference plane (400), between the first transverse plane (451) and the second transverse plane (452) is in the order of 1 to a few tenths of a millimetre.

3. Cover (4) according to any of the preceding claims, comprising means (430) for elastic snap-fit attachment to a base (3) of the electronic interface housing (300), **characterised in that** the at least one support element (405, 45) is located between a support member (44a, 44b) and an edge of the cover on which the elastic fastening means (430) are arranged.

4. Cover (4) according to any of the preceding claims, **characterised in that** the at least one support element comprises a plurality of pins (45) arranged to protrude from the inner face (401) of the cover (4), perpendicular to the reference plane (400) thereof.

5. Cover (4) according to the preceding claim, **characterised in that** the pins (45) of the at least one support element are arranged in a staggered pattern along at least two transverse lines (455, 456).

6. Cover (4) according to any one of claims 4 or 5, **characterised in that** the pins (45) constituting the at least one support element are arranged so as to protrude from a deformed area (402) of the inner face (401) of the cover (4).

7. Cover (4) according to any of the preceding claims, **characterised in that** the at least one support member (44a, 44b) comprises at least one rib (441a, 4410b, 4411b) substantially perpendicular to the first transverse plane (451).

8. Electronic interface housing (300) for an electric heating device (100) for a motor vehicle, comprising a cover (4) according to any of the preceding claims, as well as a base (3) configured to house a printed circuit board (5), the base (3) comprising latching means (33) configured to cooperate with elastic fastening means (43, 430) carried by the cover (4) in order to close a receiving cavity (35) for the printed circuit board (5).

9. Housing (300) according to the preceding claim, comprising an electrical connection area and a connection area for heating elements (2) of an electric heating device (100) for a motor vehicle, **characterised in that** the support element (45) of the cover (4) is located near the connection area to the heating elements (2) of the electric heating device (100).

10. Housing (300) according to one of claims 8 or 9, **characterised in that** the printed circuit board (5) is sandwiched between the at least one support member (44a, 44b) of the cover (4) and a reinforcing element (34) arranged in the base (3).

11. Electric heating device (100) for heating an air flow in a motor vehicle, comprising at least one heating element (2) and an electronic interface housing (300) according to any of claims 8 to 10.
